(19) **Europäisches Patentamt**

**European Patent Office**

**Office européen des brevets**

(11) **EP 1 404 065 B1**

(12) **EUROPEAN PATENT SPECIFICATION**

(45) Date of publication and mention
of the grant of the patent:
**21.12.2005 Bulletin 2005/51**

(51) Int Cl.⁷: **H04L 12/56**

(21) Application number: **02360276.6**

(22) Date of filing: **27.09.2002**

(54) **Telecommunication system with transmit diversity and multi-user diversity**

Funkkommunikationssystem mit Sendediversität und Multi-Nutzer-Diversität

Système de télécommunications avec diversité d'émission et diversité multi-utilisateur

(84) Designated Contracting States:
**AT BE BG CH CY CZ DE DK EE ES FI FR GB GR
IE IT LI LU MC NL PT SE SK TR**

(43) Date of publication of application:
**31.03.2004 Bulletin 2004/14**

(73) Proprietor: **ALCATEL**
**75008 Paris (FR)**

(72) Inventors:
• **Braun, Dr. Ing Volker**
**70178 Stuttgart (DE)**
• **Hoek, Corenlius Dipl.-Ing.**
**71732 Tamm (DE)**

(74) Representative: **Rausch, Gabriele et al**
**Alcatel**
**Intellectual Property Department, Stuttgart**
**70430 Stuttgart (DE)**

(56) References cited:
• **TOMAS HEDBERG; STEFAN PARKVALL:
"Evolving WCDMA" ERICSSON REVIEW,
[Online] no. 3, 2001, pages 124-131,
XP002228837 Retrieved from the Internet:
<URL:http://www.ericsson.com/about/public
a tions/review/2001_03/article143.shtml>
[retrieved on 2003-01-27]**
• **"3GPP TS 25.211 V3.7.0 (2001-06) 3RD
GENERATION PARTNERSHIP PROJECT
TECHNICAL SPECIFICATION GROUP RADIO
ACCESS NETWORK PHYSICAL CHANNELS
AND MAPPING OF TRANSPORT CHANNELS
ONTO PHYSICAL CHANNELS (FDD)" 3GPP TS
25.211 V3.7.0, XX, XX, vol. 3.7.0, June 2001
(2001-06), pages 1-45, XP002902457**
• **STEFAN PARKVALL; JANNE PEISA; ANDERS
FURUSKÄR; MARIA SAMUELSSON; MAGNUS
PERSSON: "Evolving WCDMA for Improved
High Speed Mobile Internet" FUTURE
TELECOMMUNICATIONS CONFERENCE,
[Online] 28 - 30 November 2001, pages 1-5,
XP002228838 Beijing, China Retrieved from the
Internet:
<URL:http://www.control.isy.liu.se/~fredri
k/score/hsdpa01.pdf> [retrieved on
2003-01-27]**

EP 1 404 065 B1

## Description

## Field of the invention

The present invention generally relates to telecommunications, and more particularly, to transmit and multi-user diversity in a cellular mobile telecommunication system.

## Background and prior art

The demand for data communication services has exploded with the acceptance and widespread use of the Internet. While data communications have historically been serviced via wired connections, wireless users are now demanding that their wireless units also support data communications. Many wireless subscribers now expect to be able to "surf" the Internet, access their email, and perform other data communication activities using their cellular phones, wireless personal data assistants, wirelessly linked notebook computers, and/or other wireless devices.

Significant performance issues exist when using a wireless network to service data communications. Wireless networks were initially designed to service the well-defined requirements of voice communications. Generally speaking, voice communications require a sustained bandwidth with minimum signal-to-noise ratio (SNR) and continuity requirements. Data communications, on the other hand, have very different performance requirements. Data communications are typically bursty, discontinuous, and may require a relatively high bandwidth during their active portions.

The wireless network infrastructure must support both low bit rate voice communications and the varying rate data communications. More particularly, the network infrastructure must transmit low bit rate, delay sensitive voice communications together with high data rate, delay tolerant rate data communications.

It is therefore desirable to provide a communication system that is capable of carrying both delay sensitive lower data rate voice communications and delay tolerant higher data rate data communications with minimal waste of spectral capacity. Further, it is also desirable to provide a communication system that also services bursty data traffic for a plurality of data users without wasting allocated spectrum.

One example of such a communication system is the Universal Mobile Telecommunications System (UTMS) Terrestrial Radio Access Network (UTRAN). The UTRAN is a third generation system which in some respects builds upon the radio access technology known as Global System for Mobile communications (GSM). UTRAN is a wideband code division multiple access (W-CDMA) system.

A goal of the Third Generation Partnership Project (3GPP) is to evolve further the UTRAN and GSM-based radio access network technologies. Of particular interest here is the support of variable transmission rate services in the third generation mobile radio communications system for both real time and non-real time delay tolerant services. Because users share the same radio resources, the radio access network must carefully allocate resources to individual user equipment (UE) connections based on quality of service requirements, such as variable rate services, and on the availability of radio resources.

For example, in a multimedia session, one bearer may carry a speech connection, another bearer carries a video connection, and a third bearer may carry a packet data connection. Connections are mapped by the UTRAN onto physical transport channels.

Between the UE and the UTRAN, a connection may be mapped to one or more dedicated transport channels (DCHs) or to a common transport channel such as a random access common channel (RACH), a forward access common channel (FACH), a common packet channel (CPCH), a downlink shared channel (DSCH), and a high speed-downlink shared channel (HS-DSCH).

Real time connections are mapped to dedicated channels. On a dedicated channel, resources may be guaranteed to provide a particular service, such as a minimum transmission rate for voice communications. For more information on transport channels, reference should be made to the UMTS 3GPP Specs as follows: 3G TS 25.211, V3.5.0; 3G TS 25.221,V3.5.0; and 3G TS 25.331, V3.5.0, 3G TR 25.848, V0.6.0, 3GPP TR 25.858 V1.0.4, 3GPP TR 25.950 V4.0.0.

To provide effective multimedia capabilities in UMTS, the High-Speed Downlink Packet Access (HSDPA) scheme is being developed which facilitates transfer of packet data to a mobile station at up to e.g. 10 Mbps.

The concept of HSDPA has been recently standardized in 3GPP for UMTS (cf. 3GP TR 25.858, V1.0.4 January 2002). It considers enhancements that can be applied to UTRA to provide very high-speed downlink packet access by means of a high-speed downlink shared channel (HS-DSCH).

For the basic structure of HS-DSCH two architectures have been considered (R2A010010: HSDPA radio interface protocol architecture, Ericsson, Motorola), i.e. an RNC-based architecture consistent with R99 architecture and a node B-based architecture for scheduling. Moving the scheduling to the nodes B enables a more efficient implementation of scheduling by allowing the scheduler to work with the most recent channel information. The scheduler can adapt the modulation to better match the current channel conditions and fading environment. Moreover, the scheduler can exploit the multi-user diversity by scheduling only those users in constructive fades.

To improve transmission in a fading environment diversity techniques based on the use of multiple downlink transmit antennas are well known. Second order applications of these have been applied in the UTRA R99 specifications. Such techniques exploit spatial and/or polarisation decorrelations over multiple channels to achieve fading diversity gains.

Multiple input multiple output (MIMO) processing employs multi antennas at both the base station transmitter and terminal receiver, providing several advantages over transmit diversity techniques with multiple antennas only at the transmitter and over single antennas systems. If multiple antennas are available at both the transmitter and the receiver, the peak throughput can be increased using a technique known as code re-use.

It is an object of the present invention to provide an improved transmit diversity technique, in particular for usage in HSDPA-type systems.

"Evolving WCDMA", Tomas Hedberg and Stefan Parkvall, Ericsson Review No. 3, 2001, shows the use of open-loop transmit diversity, where the downlink data is transmitter over two antennas simultaneously using a special form of coding. Further, fast scheduling is disclosed whereby a scheduler exploits the multi-user diversity and strives to transmit to users when radio conditions permit high data rates.

## Summary of the invention

The present invention provides for an improved transmit diversity technique which enables to make efficient usage of the total available transmission power of the power amplifiers, in particular for providing both real time and non-real time services. In a preferred application of the present invention real time signals, such as voice and/or video signals, are sent out by applying a transmit diversity technique with multiple power amplifiers and multiple antennas. Each of the power amplifiers supports at least two carrier frequencies. The real time signals are split up into a group of signals which are sent on the first carrier frequency and into another group of signals which are sent on the second carrier frequency.

Non-real time signals are scheduled in order to exploit multi-user diversity by scheduling only those users in constructive fades. Because of this kind of scheduling no transmit diversity is required. In order to make symmetric usage of the power amplifiers the active user equipments within the cell are split into a group which is assigned to the first transmission frequency and into another group which is assigned to the second transmission frequency. Non-real time signals which are to be sent to the first group of user equipments are amplified by the first power amplifier and non-real time signals to be sent to the second group are amplified by the second power amplifier. Hence, in average the usage of the power amplifiers is about symmetric and efficient usage of the total available transmission power is made.

In accordance with a preferred embodiment of the invention the real time signals are transmitted over DPCHs and the non-real time signals over a shared HS-DSCH of a HSDPA system. The real time signals are transmitted on the DPCHs using transmit diversity and each of the non-real time signals is transmitted over HS-DSCH over only one of the transmission antennas without transmit diversity but applying multi-user diversity. This way statistical balancing of transmission power can be achieved by using multi-carrier power amplifiers.

In accordance with a further preferred embodiment of the invention more than two carrier frequencies are used. The multi-carrier power amplifiers needs tc support these carrier frequencies. To obtain statistical balancing of the usage of the transmission power of the power amplifiers the number of carrier frequencies must be equal to the number of diversity branches. For example, instead of a two transmit diversity scheme with a two-carrier power amplifier a four-transmit diversity scheme with a four-carrier power amplifier can be used.

## Brief description of the drawings

In the following preferred embodiments of the invention will be described in greater detail by making reference to the drawings in which:

Figure 1     is a block diagram of a preferred embodiment of the transmission system of the present invention

Figure 2     is illustrative of the statistical utilisation of the transmission power capacities of the dual carrier power amplifiers of the system of figure 1,

Figure 3     is illustrative of a flow chart of a preferred embodiment of a method of the invention.

## Detailed description

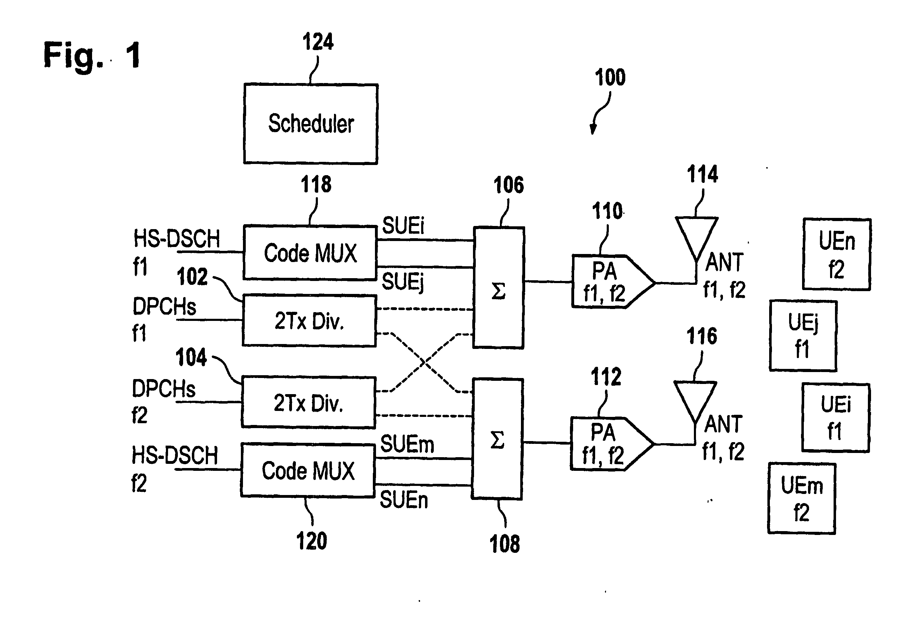

Figure 1 shows a block diagram of a telecommunication system for servicing a number of mobile user equipments (UEs). By way of example the user equipments UEn UEj UEi and UEm are shown in the block diagram of figure 1; it needs to be noted that in a practical application there can be many more UEs.

Each of the UEs is assigned to a first transmission frequency f1 or a second transmission frequency f2. For example UEn is assigned to f2, UEj is assigned to f1, UEi is assigned to f1 and UEm is assigned to f2. This way the UEs are split into a first group of UEs which are assigned to the first carrier frequency f1 and into a second group which is assigned to the second carrier frequency f2.

Preferably the assignment of carrier frequencies to UEs is performed by appropriate signalling between the UEs and the transmitter 100 of the telecommunication system. For example carrier frequencies are assigned to UEs which become active alternatingly. For example the UEs become active in the following sequence:

UEi, UEn UEj, UEm, ...

The first UE which becomes active, i.e. UEi, is assigned to the first carrier frequency f1. The second UE which becomes active, i.e. UEn is assigned to the second carrier frequency f2. The next UE which becomes active, i.e. UEj, is assigned to the first carrier frequency f1, and so on. This way the two groups of UEs results, where each group comprises about the same number of UEs if a larger number of UEs is considered.

Preferably the assignment of UEs to frequencies is performed in order to balance the load of the power amplifiers. It is to be noted that this assignment can be dynamic and that Fig. 1 is to be understood as a snap shot.

The transmitter 100 serves to transmit both real time and non-real time signals to the UEs. Real time signals, such as voice or video signals, are transmitted via DPCHs. Each of the DPCH's is assigned to either the first carrier frequency f1 or to the second carrier frequency f2. In order to provide transmit diversity for the DPCHs the transmitter 100 has transmit diversity modules 102 and 104.

Transmit diversity module 102 receives real time signals which are to be transmitted on a DPCH being assigned to the frequency f1. Likewise transmit diversity module 104 receives such real time signals which are to be transmitted on DPCHs being assigned to the second carrier frequency f2.

Transmit diversity module 102 is coupled via adders 106 and 108 to power amplifiers 110 and 112, respectively. Both power amplifiers 110 and 112 are dual-carrier power amplifiers which support the carrier frequencies f1 and f2. Power amplifier 110 is coupled to antenna 114 and power amplifier 112 is coupled to antenna 116. This way any known diversity technique based on the use of multiple downlink transmit antennas can be implemented.

For the HSDSCH the transmitter has code multiplexers 118 and 120. Code multiplexer 118 has an input for receiving of non-real time signals to be sent to the first group of UEs, i.e. to UEs which are assigned to the second carried frequency f2. This way the signal components SUEi, SUEj,... to be transmitted on carrier frequency f1 and the signal components SUEm, SUEn, ... to be transmitted on carrier frequency f2 are provided by the code multiplexes 118 and 120, respectively. The signal components SUEi, SUEj, ... which are to be transmitted on carrier frequency f1 are input into adder 106. Likewise the signal components SUEm, SUEn, ... are input into adder 108.

Further the transmitter 100 has scheduler 124. Scheduler 124 schedules the non-real time signals to be sent over HS-DSCH in order to provide multi-user diversity by scheduling only non-real time signals to users in constructive fades.

In operation, the power amplifier 110 is controlled to amplify the real time signals of the DPCHs being assigned to the frequency f1 on carrier frequency f1 and the real time signal components of the DPCHs assigned to the carrier frequency of f2 on frequency f2. The signal components SUEi, SUEj, ... of HS-DSCH to be sent on carrier frequency f1 are only amplified by power amplifier 110 on carrier frequency f1. The same principlel applies correspondingly to the operation of power amplifier 112.

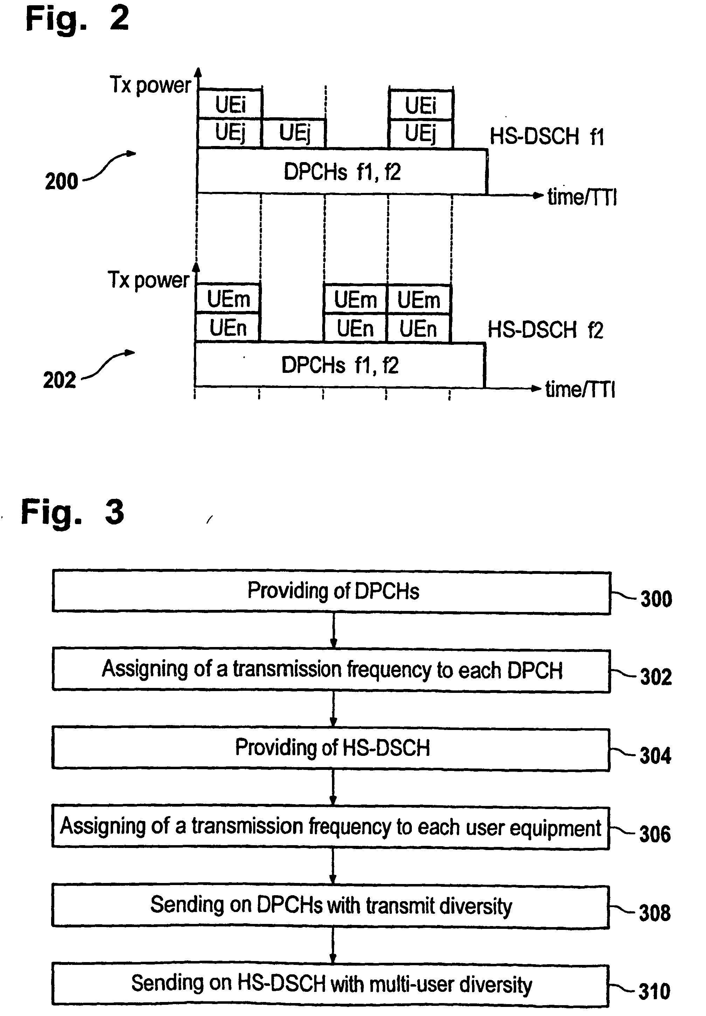

The statistical balancing of the utilisation of the total available transmission power is illustrated by way of example in figure 2. Figure 2 shows diagrams 200 and 202 illustrating the utilisation of the transmission power of power amplifiers 110 and 112 of figure 1, respectively, in the time domain. The time axis is divided into scheduling intervals, which are referred to as transmission time intervals (TTI) in UTRA notation. As it is apparent from figure 2 most of the time both power amplifiers 110 and 112 are operated at or close to their respective maximum power output capability.

Figure 3 illustrates an embodiment of a method of the invention by way of example. In step 300 DPCHs are provided for transmitting of real time signals. A transmission frequency of a set of transmission frequencies is assigned to each one of the DPCHs in step 302.

In step 304 a HS-DSCH is provided as a shared channel for transmitting of non-real time signals. In step 306 a transmission frequency of the set of transmission frequencies is assigned to each active UE within the cell. This is done by an appropriate signalling protocol. When the UEs are capable to receive only one carrier frequency this step is not required as the carrier frequency has already been assigned in step 302. In this instance the carrier frequency assigned in step 302 to a UE will also be used for the HS-DSCH transmission to that UE.

In step 308 the real time signals are sent on the DPCHs with transmit diversity. In step 310 the non-real time signals are sent on the shared HS-DSCH with multi-user diversity but without transmit diversity. Due to the assignment of transmission frequencies to user equipment in step 306 a statistical balancing of the utilisation of the power amplifiers is accomplished.

list of reference numerals

| | |
|-----|-----------------------|
| 100 | transmitter |
| 102 | transmit diversity module |
| 104 | transmit diversity module |
| 106 | adder |
| 108 | adder |
| 110 | power amplifier |
| 112 | power amplifier |

| 114 | antenna |
|---|---|
| 116 | antenna |
| 118 | code multiplexer |
| 120 | code multiplexer |
| 124 | scheduler |
| 200 | diagram |
| 202 | diagram |

**Claims**

1. A method of sending first and second signals to a plurality of user equipments (UEs), the method comprising the steps of:

   - providing (300) of a dedicated channel (DPCH) for each one of the plurality of user equipments,

   - assigning (302) a dedicated-channel carrier frequency of a set of at least first and second carrier frequencies (f1, f2) to each one of the dedicated channels,

   - providing (304) of first and second code-multiplexed shared channels (HS-DSCH) for the plurality of user equipments, the first code-multiplexed shared channel having a first code-multiplexed shared channel carrier frequency and the second code-multiplexed shared channel having a second code-multiplexed shared channel carrier frequency,

   - assigning (306) of one of the first and second code-multiplexed shared channel carrier frequencies to each user equipment,

   - scheduling of the second signals to be sent over the code-multiplexed shared channels in order to provide multi-user diversity by scheduling only second signals to user equipments in constructive fades,

   - sending (308) of one of the first signals to one of the plurality of user equipments on the dedicated channel of that user equipment on the assigned dedicated-channel carrier frequency by applying a transmit diversity scheme, using first (110) and second (112) power amplifiers,

   - sending (310) of one of the second signals to one of the plurality of user equipments on one of the code-multiplexed shared channels on the code-multiplexed shared channel carrier frequency being assigned to that user equipment by applying the multi-user diversity, using the first (110) or the second (112) power amplifier depending on the code-multiplexed shared channel carrier frequency assigned to the user equipment in order to achieve a statistical balancing of the power amplifiers.

2. The method of claim 1, the code-multiplexed shared channel frequency assigned to one of the plurality of user equipments being equal to the dedicated-channel carrier frequency assigned to that user equipment.

3. The method of claim 1, the dedicated channels being DPCH type channels and the code-multiplexed shared channels being HS-DSCH type channels of a HSDPA type transmission system.

4. The method of claim 1, whereby the sending of one of the first signals and the one of the second signals is performed by means of first and second multi-carrier power amplifiers (110, 112) being coupled to first and second antennas (114, 116), the first and second multi-carrier amplifiers having at least the first and the second carrier frequencies.

5. The method of claim 1, the set of carrier frequencies having a number of n carrier frequencies.

6. A computer program product, in particular digital storage device, having program means for sending of first and second signals to a plurality of user equipments, the program means being adapted to perform the steps of:

   - providing (300) of a dedicated channel (DPCH) for each one of the plurality of user equipments,

   - assigning (302) a dedicated-channel carrier frequency of a set of at least first and second carrier frequencies (f1, f2) to each one of the dedicated channels,

   - providing (304) of first and second code-multiplexed shared channels (HS-DSCH) for the plurality of user equipments, the first code-multiplexed shared channel having a first code-multiplexed shared channel carrier frequency and the second code-multiplexed shared channel having a second code-multiplexed shared channel carrier frequency,

   - assigning (306) of one of the first and second code-multiplexed shared channel carrier frequencies to each user equipment,

   - scheduling of the second signals to be sent over the code-multiplexed shared channels in order to provide multi-user diversity by scheduling only second signals to user equipments in constructive fades,

- sending (308) of one of the first signals to one of the plurality of user equipments on the dedicated channel of that user equipment on the assigned dedicated-channel carrier frequency by applying a transmit diversity scheme, using first (110) and second (112) power amplifiers,

- sending (310) of one of the second signals to one of the plurality of user equipments on one of the code-multiplexed shared channels on the code-multiplexed shared channel carrier frequency being assigned to that user equipment by applying a multi-user diversity scheme, using the first (110) or the second (112) power amplifier depending on the carrier frequency assigned to the user equipment in order to achieve a statistical balancing of the power amplifiers.

7. A transmitter for sending of first and second signals to a plurality of user equipments, the transmitter (100) comprising:

- a first component for providing (300) of a dedicated channel (DPCH) for each one of the plurality of user equipments (UEs),

- a second component for assigning (302) a dedicated-channel carrier frequency of a set of at least first and second carrier frequencies (f1, f2) to each one of the dedicated channels,

- a third component for providing (304) of first and second code-multiplexed shared channels (HS-DSCH) for the plurality of user equipments, the first code-multiplexed shared channel having a first code-multiplexed shared channel carrier frequency and the second code-multiplexed shared channel having a second code-multiplexed shared channel carrier frequency,

- a fourth component for assigning (306) of one of the first and second code-multiplexed shared channel carrier frequencies to each user equipment,

- scheduler means (124) for providing the multi-user diversity for the code-multiplexed shared channels for sending of one of the second signals only when a constructive channel fade is detected,

- a fifth component (102, 104) for sending of one of the first signals to one of the plurality of user equipments on the dedicated channel of that user equipment on the assigned dedicated-channel carrier frequency by applying a transmit diversity scheme using first (110) and second (112) power amplifiers,

- a sixth component (118, 120; 124) for sending of one of the second signals to one of the plurality of user equipments on one of the code-multiplexed shared channels on the code-multiplexed shared channel carrier frequency being assigned to that user equipment by applying a multi-user diversity scheme using the first (110) or the second (112) power amplifier depending on the code-multiplexed shared channel carrier frequency assigned to the user equipment in order to achieve a statistical balancing of the power amplifiers.

8. The transmitter of claim 7, the fifth component for sending of the one of the first signals and the sixth component for sending of the one of the second signals being provided by first and second multi-carrier amplifier components (110, 112) being coupled to first and second antenna components (114,116), the first and second multi-carrier amplifiers having at least the first and the second frequencies.

9. The transmitter of claim 7, the set of carrier frequencies having a number of n carrier frequencies.

**Patentansprüche**

1. Verfahren zum Senden erster und zweiter Signale an mehrere Benutzergeräte (User Equipments, UEs), wobei das Verfahren die Schritte beinhaltet,

- für jeden der mehreren Benutzergeräte einen fest zugewiesenen Kanal (DPCH) bereitzustellen (300),
- jedem der fest zugewiesenen Kanäle eine einem Kanal fest zugewiesene Trägerfrequenz aus einer Gruppe von mindestens einer ersten und einer zweiten Trägerfrequenz (f1, f2) zuzuordnen (302),
- den mehreren Benutzergeräten erste und zweite gemeinsam genutzte Codemultiplexkanäle (HS-DSCHs) zur Verfügung zu stellen (304), wobei der erste gemeinsam genutzte Codemultiplexkanal eine erste Trägerfrequenz für den gemeinsam genutzten Codemultiplexkanal und der zweite gemeinsam genutzte Codemultiplexkanal eine zweite Trägerfrequenz für den gemeinsam genutzten Codemultiplexkanal hat,
- jedem Benutzergerät eine der ersten und zweiten Trägerfrequenzen für die gemeinsam genutzten Codemultiplexkanäle zuzuordnen (306),
- die über die gemeinsam genutzten Codemultiplexkanäle zu sendenden zweiten Signale zeitlich so zu koordinieren, daß eine Mehrbenutzerdiversität erzielt wird, indem nur zweite Signale für Benutzergeräte in konstruktiven Fadings berücksichtigt werden,

- eines der ersten Signale an eines der mehreren Benutzergeräte über den fest zugewiesenen Kanal dieses Benutzergeräts auf der zugeordneten Trägerfrequenz des fest zugewiesenen Kanals durch Anwenden eines Sendediversitätsverfahrens unter Verwendung von ersten (110) und zweiten (112) Leistungsverstärkern zu senden (308),

- eines der zweiten Signale an eines der mehreren Benutzergeräte auf einem der gemeinsam genutzten Codemultiplexkanäle auf der diesem Benutzergerät zugeordneten Trägerfrequenz für den gemeinsam genutzten Codemultiplexkanal unter Anwenden der Mehrbenutzerdiversität zu senden (310), wobei in Abhängigkeit von der dem Benutzergerät zugeordneten Trägerfrequenz für den gemeinsam genutzten Codemultiplexkanal der erste (110) oder der zweite (112) Leistungsverstärker so verwendet wird, daß eine statistisch gleichverteilte Belastung der Leistungsverstärker erzielt wird.

2. Verfahren gemäß Anspruch 1, wobei die einem der mehreren Benutzergeräte zugeordnete Frequenz für den gemeinsam genutzten Codemultiplexkanal identisch mit der diesem Benutzergerät zugeordneten Trägerfrequenz des fest zugewiesenen Kanals ist.

3. Verfahren gemäß Anspruch 1, wobei die fest zugewiesenen Kanäle solche vom DPCH-Typ und die gemeinsam genutzten Codemultiplexkanäle solche vom HS-DSCH-Typ eines Übertragungssystems vom HSDPA-Typ sind.

4. Verfahren gemäß Anspruch 1, wobei das Senden eines der ersten Signale und eines der zweiten Signale mit ersten und zweiten Mehrfachträger-Leistungsverstärkern (110, 112) bewerkstelligt wird, die mit ersten und zweiten Antennen (114, 116) gekoppelt sind, und wobei die ersten und zweiten Mehrfachträger-Leistungsverstärker mindestens die erste und zweite Trägerfrequenz aufweisen.

5. Verfahren gemäß Anspruch 1, wobei die Gruppe von Trägerfrequenzen n Trägerfrequenzen umfaßt.

6. Computerprogrammprodukt, insbesondere ein digitales Speichergerät, welches Programmittel zum Senden erster und zweiter Signale an mehrere Benutzergeräte besitzt, wobei die Programmittel zur Durchführung der Schritte ausgelegt sind,

- jedem der mehreren Benutzergeräte einen fest zugewiesenen Kanal (DPCH) zur Verfügung zu stellen (300),

- jedem der fest zugewiesenen Kanäle eine Trägerfrequenz für einen fest zugewiesenen Kanal aus einer Gruppe von mindestens ersten und zweiten Trägerfrequenzen (f1, f2) zuzuordnen (302),

- erste und zweite gemeinsam genutzte Codemultiplexkanäle (HS-DSCHS) für die mehreren Benutzergeräte bereitzustellen (304), wobei der erste gemeinsam genutzte Codemultiplexkanal eine erste Trägerfrequenz für einen gemeinsam genutzten Codemultiplexkanal und der zweite gemeinsam genutzte Codemultiplexkanal eine zweite Trägerfrequenz für einen gemeinsam genutzten Codemultiplexkanal hat,

- jedem Benutzergerät eine der ersten und zweiten Trägerfrequenzen für gemeinsam genutzte Codemultiplexkanäle zuzuordnen (306),

- die zweiten über die gemeinsam genutzten Codemultiplexkanäle zu sendenden Signale zeitlich so zu koordinieren, daß eine Mehrbenutzerdiversität gegeben ist, indem nur zweite Signale für Benutzer in konstruktiven Fadings berücksichtigt werden,

- einen der ersten Signale an eines der mehreren Benutzergeräte über den fest zugewiesenen Kanal dieses Benutzergeräts auf der zugeordneten Trägerfrequenz des test zugewiesenen Kanals durch Anwenden eines Sendediversitätsverlahrens unter Verwendung von ersten (110) und zweiten (112) Leistungsverstärkern zu senden (308),

- eines der zweiten Signale an eines der mehreren Benutzergeräte über einen der gemeinsam genutzten Codemultiplexkanäle auf der diesem Benutzergerat zugeordneten Trägerfrequenz des gemeinsam genutzten Codemultiplexkanals durch Anwenden eines Mehrbenutzer-Diversitätsverfahrens unter Verwendung des ersten (110) oder zweiten (112) Leistungsverstärkers in Abhängigkeit von der dem Benutzergerät zugeordneten Trägerfrequenz zu senden (310), um eine statistisch gleichverteilte Belastung der Leistungsverstärker zu erzielen.

7. Sender zum Senden erster und zweiter Signale an mehrere Benutzergeräte, wobei der Sender (100)

- eine erste Komponente zum Bereitstellen (300) eines fest zugewiesenen Kanals (DPCH) für jedes der mehreren Benutzergeräte (UEs),

- eine zweite Komponente zum Zuordnen (302) einer Trägerfrequenz eines fest zugewiesenen Kanals aus einer Gruppe von mindestens ersten und zweiten Trägerfrequenzen (f1, f2) zu jedem der fest zugewiesenen Kanäle,

- eine dritte Komponente zum Bereitstellen (304) erster und zweiter gemeinsam genutzter Codemultiplexkanäle (HS-DSCHs) gegenüber den mehreren Benutzergeräten, wobei der erste gemeinsam genutzte Codemultiplexkanal eine erste Trägerfrequenz für den gemeinsam genutzten Codemultiplexkanal und der zweite gemeinsam genutzte Codemultiplexkanal eine zweite Trägerfrequenz für den gemeinsam genutzten Codemultiplexkanal hat,

- eine vierte Komponente zum Zuordnen (306) einer der ersten und zweiten Trägerfrequenzen für die gemeinsam genutzten Codemultiplexkanäle zu jedem Benutzergerät,

- Scheduler-Mittel (124) zum Bereitstellen der Mehrbenutzer-Diversität für die gemeinsam genutzten Codemultiplexkanäle zum Senden eines der zweiten Signale, jedoch nur dann, wenn ein konstruktiver Kanal-Fade festgestellt wird,

- eine fünfte Komponente (102, 104) zum Senden eines der ersten Signale an eines der mehreren Benutzergeräte auf dem fest zugewiesenen Kanal dieses Benutzergeräts auf der zugeordneten Trägerfrequenz des fest zugewiesenen Kanals durch Anwenden eines Sendediversitätsverfahrens unter Verwendung von ersten (110) und zweiten (112) Leistungsverstärkern und

- eine sechste Komponente (118, 120; 124) zum Senden eines der zweiten Signale an eines der mehreren Benutzergeräte auf einem der gemeinsam genutzten Codemultiplexkanäle auf der diesem Benutzergerät zugeordneten Trägerfrequenz für den gemeinsam genutzten Codemultiplexkanal unter Anwenden eines Mehrbenutzerdiversitäts-Verfahrens, wobei in Abhängigkeit von der dem Benutzergerät zugeordneten Trägerfrequenz für den gemeinsam genutzten Codemultiplexkanal der erste (110) oder der zweite (112) Leistungsverstärker verwendet wird, um eine statistisch gleichverteille Belastung der Leistungsverstärker zu erzielen,

  beinhaltet.

8. Sender gemäß Anspruch 7, wobei die fünfte Komponente zum Senden eines der ersten Signale und die sechste Komponente zum Senden eines der zweiten Signale von ersten und zweiten Mehrfachträger-Verstärkerkomponenten (110, 112) bereitgestellt werden, die mit ersten und zweiten Antennenkomponenten (114, 116) gekoppelt sind, und wobei die ersten und zweiten Mehrfachträger-Verstärkerkomponenten mindestens die erste und die zweite Frequenz haben.

9. Sender gemäß Anspruch 7, wobei die Gruppe von Trägerfrequenzen n Trägerfrequenzen umfaßt.

**Revendications**

1. Procédé d'envoi d'un premier et d'un second signal à une pluralité d'équipements d'utilisateurs (UE : User Equipment), le procédé comprenant les étapes de :

   • fournir (300) un canal dédié (DPCH) à chaque équipement parmi la pluralité d'équipements d'utilisateurs,

   • affecter (302) un fréquence porteuse de canal dédié parmi un ensemble d'au moins une première et une seconde fréquences porteuses (f1, f2) à chacun des canaux dédiés,

   • fournir (304) un premier et un second canal partagé à multiplexage de code (HS-DSCH : code-multiplexed shared channel) pour la pluralité d'équipements d'utilisateurs, le premier canal partagé à multiplexage de code possédant une première fréquence porteuse de canal partagé à multiplexage de code et le second canal partagé à multiplexage de code ayant une seconde fréquence porteuse de canal partagé à multiplexage de code,

   • affecter (306) l'une parmi la première et la seconde fréquences porteuses de canal partagé à multiplexage de code à chaque équipement d'utilisateur,

   • programmer les seconds signaux à envoyer sur les canaux partagés à multiplexage de code afin d'assurer la diversité multi-utitisateur en programmant seulement de seconds signaux à des équipements d'utilisateurs en évanouissements constructifs,

   • envoyer (308) un des premiers signaux à l'un parmi la pluralité d'équipements d'utilisateurs sur le canal dédié de cet équipement d'utilisateur sur la fréquence porteuse de canal dédié affectée en appliquant un programme de diversité d'émission, au moyen du premier (110) et du second (112) amplificateurs de puissance,

   • envoyer (310) un des seconds signaux à l'un parmi la pluralité d'équipements d'utilisateurs sur l'un des canaux partagés à multiplexage de code sur la fréquence porteuse de canal partagé à multiplexage de code qui est affectée à cet équipement d'utilisateur en appliquant la diversité multi-utilisateur, au moyen du premier (110) ou du second (112) amplificateur de puissance en fonction de la fréquence porteuse du canal partagé à multiplexage de code affectée à l'équipement d'utilisateur afin d'obtenir un équilibrage statistique des amplificateurs de puissance.

**2.** Procédé selon la revendication 1, la fréquence du canal partagé à multiplexage de code affectée à l'un parmi la pluralité d'équipements d'utilisateurs étant égale à la fréquence porteuse du canal dédié affectée à cet équipement d'utilisateur.

**3.** Procédé selon la revendication 1, les canaux dédiés étant des canaux de type DSCH et les canaux partagés à multiplexage de code étant des canaux du type HS-DSCH d'un système de transmission du type HSDPA.

**4.** Procédé selon la revendication 1, au moyen duquel l'envoi d'un des premiers signaux et de l'un des seconds signaux est réalisé au moyen du premier et du second amplificateurs de puissance à porteuses multiples (110, 112) qui sont couplés à une première et à une seconde antennes (114, 116), le premier et le second amplificateurs à porteuses multiples ayant au moins la première et la seconde fréquences porteuses.

**5.** Procédé selon la revendication 1, l'ensemble de fréquences porteuses possédant un nombre de n fréquences porteuses.

**6.** Produit de programme de calcul, en particulier mémoire numérique, possédant des moyens de programme pour l'envoi de premiers et de seconds signaux à une pluralité d'équipements d'utilisateurs, les moyens de programme étant aptes à accomplir les étapes de :

- fournir (300) un canal dédié (DPCH) à chacun de la pluralité d'équipements d'utilisateurs,
- affecter (302) une fréquence porteuse de canal dédié parmi un ensemble d'au moins une première et une seconde fréquences porteuses (f1, f2) à chacun des canaux dédiés,
- fournir (304) un premier et un second canaux partagés à multiplexage de code (HS-DSCII) pour la pluralité d'équipements d'utilisateurs, le premier canal partagé à multiplexage de code possédant une première fréquence porteuse de canal partagé à multiplexage de code et le second canal partagé à multiplexage de code possédant une seconde fréquence porteuse de canal partagé à multiplexage de code,
- affecter (306) l'une de la première et de la seconde fréquences porteuses de canal partagé à multiplexage de code à chaque équipement d'utilisateur,
- programmer les seconds signaux à envoyer sur les canaux partagés à multiplexage de code afin d'assurer une diversité multi-utilisateur en programmant seulement de seconds signaux pour les équipements d'utilisateurs en évanouissements constructifs,

- envoi (308) de fun des premiers signaux à l'un parmi la pluralité d'équipements d'utilisateurs sur le canal dédié de cet équipement d'utilisateur sur la fréquence porteuse de canal dédié affectée en appliquant un programme de diversité d'émission, au moyen du premier (110) et du second (112) amplificateurs de puissance,
- envoi (310) de l'un des seconds signaux à l'un parmi la pluralité d'équipements d'utilisateurs sur l'un des canaux partagés à multiplexage de code sur la fréquence porteuse de canal partagé à multiplexage de code qui est affectée à cet équipement d'utilisateur en appliquant un programme de diversité multi-utilisateur, au moyen du premier (110) ou du second (112) amplificateur de puissance en fonction de la fréquence porteuse affectée à l'équipement d'utilisateur afin d'obtenir un équilibrage statistique des amplificateurs de puissance.

**7.** Emetteur destiné à envoyer de premiers et de seconds signaux à une pluralité d'équipements d'utilisateurs, l'émetteur (100) comprenant :

- un premier composant destiné à fournir (300) un canal dédié (DCPH) à chacun de la pluralité d'équipements d'utilisateurs (UE),
- un second composant destiné à affecter (302) une fréquence porteuse de canal dédié parmi un ensemble d'au moins une première et une seconde fréquences porteuses (f1, f2) à chacun des canaux dédiés,
- un troisième composant destiné à fournir (304) un premier et un second canaux partagés à multiplexage de code (HS-DSCH) à la pluralité d'équipements d'utilisateurs, le premier canal partagé à multiplexage de code ayant une première fréquence porteuse de canal partagé à multiplexage de code et le second canal partagé à multiplexage de code ayant une seconde fréquence porteuse de canal partagé à multiplexage de code,
- un quatrième composant destiné à affecter (306) l'une de la première et de la seconde fréquences porteuses de canal partagé à multiplexage de code à chaque équipement d'utilisateur,
- un moyen programmateur (124) destiné à assurer la diversité multi-utilisateur pour les canaux partagés à multiplexage de code pour l'envoi de l'un des seconds signaux uniquement lorsqu'un évanouissement constructif de canal est détecté,
- un cinquième composant (102, 104) destiné à envoyer l'un des premiers signaux à l'un de la pluralité d'équipements d'utilisateurs sur le canal dédié de cet équipement d'utilisateur sur la fréquence porteuse de canal dédié affectée en appliquant un programme de diversité d'émission au moyen du premier (110) et du second (112) amplificateurs de puissance.

- un sixième composant (118, 120 ; 124) destiné à envoyer l'un des seconds signaux à l'un parmi la pluralité d'équipements d'utilisateurs sur un des canaux partagés à multiplexage de code sur la fréquence porteuse de canal partagé à multiplexage de code qui est affectée à cet équipement d'utilisateur en appliquant un programme de diversité multi-utilisateur au moyen du premier (110) ou du second (112) amplificateur de puissance en fonction de la fréquence porteuse de canal partagé à multiplexage de code affectée à l'équipement d'utilisateur afin d'obtenir un équilibrage statistique des amplificateurs de puissance.

**8.** Emetteur selon la revendication 7, le cinquième composant destiné à envoyer l'un des premiers signaux et le sixième composant destiné à envoyer l'un des seconds signaux étant fournis par de premiers et de seconds composants d'amplificateurs à porteuses multiples (110, 112) qui sont couplés à de premiers et de seconds composants d'antennes (114, 116), le premier et le second amplificateurs à porteuses multiples possédant au moins la première et la seconde fréquences.

**9.** Emetteur selon la revendication 7, l'ensemble des fréquences porteuses possédant un nombre de n fréquences porteuses.

**Fig. 1**

EP 1 404 065 B1

# Fig. 2

# Fig. 3